# EUROPÄISCHE PATENTSCHRIFT

(11) **EP 2 784 535 B1**
(45) Veröffentlichungstag und Bekanntmachung des Hinweises auf die Patenterteilung: **27.04.2016**
(21) Anmeldenummer: 14151374.7
(22) Anmeldetag: 16.01.2014
(51) Int. Cl.: G01S 13/56, G08B 13/24, G01S 13/04, G01S 13/10, G01S 13/86

(54) **Verfahren zum Detektieren einer Änderung innerhalb eines einem Präsenz- oder Überwachungssensor zugeordneten Erfassungsbereiches sowie Überwachungseinrichtung**
Method for detecting a change within a surveillance area allocated to a presence or surveillance sensor and monitoring system
Procédé de détection d'une variation des signaux à l'intérieur d'une zone de détection d'un capteur de présence ou de surveillance et dispositif de surveillance

(30) Priorität: 25.03.2013 DE 102013103002
(43) Veröffentlichungstag der Anmeldung: 01.10.2014
(73) Patentinhaber: Insta Elektro GmbH, 58509 Lüdenscheid (DE)
(72) Erfinder: Naurath, Dirk, 44797 Bochum (DE); Becker-Hennecke, Ralph, 58239 Schwerte (DE); Dufhues, Stephan, 58089 Hagen (DE)

(56) Entgegenhaltungen:
- EP-A2- 0 023 625
- WO-A1-2010/086858
- US-A1- 2008 165 046

## Beschreibung

Die Erfindung betrifft ein Verfahren zum Detektieren eines Objekts innerhalb eines einem Präsenz- oder Bewegungssensor zugeordneten Erfassungsbereiches, umfassend: Generieren und Senden eines Radar-Signals, Empfang eines von einem in Detektionsreichweite befindlichen Objekt reflektierten Signals (Empfangssignal) und Auswerten desselben in Bezug auf seine Entfernung zu den Sensoren. Ferner betrifft die Erfindung eine Überwachungseinrichtung, insbesondere eine solche, mit der das vorstehende Verfahren durchgeführt wird bzw. werden kann.

Unter dem im Rahmen dieser Ausführungen benutzten Begriff einer Änderung innerhalb eines einem Präsenz- oder Bewegungssensor zugeordneten Erfassungsbereiches sind prinzipiell sämtliche Bewegungen zu verstehen, auch sogenannte quasi statische Änderungen. Bei diesen handelt es sich beispielsweise um das Erfassen einer im Erfassungsbereich befindlichen Person, die sich über mehrere Erfassungsintervalle hinweg scheinbar nicht bewegt hat, bezüglich dieser Person jedoch kleinere Bewegungen, etwa Atmungsbewegungen oder nur kleinere Änderungen in der Kopfhaltung ebenfalls zu Änderungen führen.

Derartige Detektionseinrichtungen dienen beispielsweise zum Detektieren von Bewegungen. Mithin handelt es sich sodann um Bewegungsdetektionseinrichtungen, sogenannte Bewegungsmelder. Diese arbeiten oftmals mit einem Infrarotsignal. Ziel derartiger Einrichtungen ist es, innerhalb des jeweiligen Überwachungsbereiches Bewegungen zu erkennen. Je nach Einsatz einer solchen Bewegungsdetektionseinrichtung dienen diese zum Überwachen von Außenbereichen von Gebäuden. Bewegungsmelderanordnungen sind auch aus dem Gebäudeinnenbereich bekannt. In Abhängigkeit von dem Einsatz einer solchen Bewegungsdetektionseinrichtung können an die Detektion einer Bewegung unterschiedliche Aktionen gekoppelt sein. Im Zusammenhang mit einem Gebäudeinstallationssystem werden Bewegungsdetektionseinrichtungen eingesetzt, um in Abhängigkeit von der erkannten Bewegung einer Person im Detektionsbereich bestimmte gebäudetechnische Installationen, beispielsweise das Licht, zu schalten.

Eine solche Einrichtung ist aus DE 10 2004 011 108 A1 bekannt. Bei dieser vorbekannten Bewegungsdetektionseinrichtung wird ein Radarsensor eingesetzt, der gegenüber optischen Sensoren den Vorteil einer unsichtbaren Installation, also einer Installation, etwa hinter einer Fliese als Wandbelag, hat. Radarsensoren arbeiten unter Ausnutzung des Doppler-Effektes. Ausgewertet wird bei derartigen Radarverfahren die von einem im Detektionsbereich befindlichen Objekt aufgrund der Signalreflektion erfolgende Verschiebung um die Dopplerfrequenz, wobei das Maß der Verschiebung ein Maß für die Geschwindigkeit des im Überwachungsbereich befindlichen Objekts zur Bewegungsdetektionseinrichtung ist. Derartige Systeme arbeiten mit Frequenzen von etwa 24 GHz. Eine Weiterbildung dieses an sich bekannten Verfahrens ist in DE 197 49 991 C1 beschrieben. Bei diesem Verfahren werden die Sendesignale kontinuierlich oder gepulst, typischerweise im Mikrowellenbereich gesendet. Die Empfindlichkeit und die Reichweite dieser vorbekannten Bewegungsdetektionseinrichtung werden unter anderem durch die Antennenapparatur und damit durch den Abstand zwischen der Sendeantenne und der Empfangsantenne bestimmt. Die Reichweite von vorbekannten, mit Pulsradarsignalen betriebenen Bewegungsdetektionseinrichtungen liegt aus technologischen Gründen bei etwa 10-15 m. Herkömmliche, nach dem Doppler-Radar arbeitende Systeme gestatten zwar eine bessere Reichweite, allerdings können mit diesem Verfahren nur bewegte Objekt detektiert werden.

Aus US 5,345,471 A1 ist ein UWB-Empfänger zum Detektieren eines UWB-Impuls-Signals bekannt. Eingesetzt wird der aus diesem Dokument bekannte Empfänger im Zusammenhang mit einem Radarüberwachungssystem. Dieser vorbekannte UWB-Empfänger arbeitet nach dem Prinzip einer Leistungsdetektion, ebenso wie die anderen vorstehend beschriebenen Radarsensoren. Der UWB-Empfänger ist zum Empfangen relativ niederfrequenter Radarsignale ausgelegt. Dadurch ist die Auflösung für viele Anwendungsfälle allerdings nicht hinreichend. Der aus diesem Dokument bekannte UWB-Empfänger ist für einen Einsatz im Zusammenhang mit Bewegungsdetektionseinrichtungen, wie diese beispielsweise im Rahmen einer Gebäudeinstallation eingesetzt werden, nicht geeignet.

Zwar haben sich Radar-Systeme zur Ermittlung des Abstandes eines Objektes von dem Sensor bewährt. Es wäre dennoch wünschenswert, wenn im Zusammenhang mit einer Präsenz- oder Bewegungsdetektion nicht nur der Abstand eines innerhalb des Überwachungsbereiches befindlichen Objektes zu dem Sensor erfasst werden könnte, sondern wenn darüber hinaus eine Aussage zu der Position des Objektes innerhalb des Überwachungsbereiches getroffen werden könnte, mithin eine Positionsbestimmung des Objektes innerhalb des Überwachungsbereiches vorgenommen werden könnte.

Die EP 0 023 625 A2 zeigt ein Alarmsystem zum Feststellen des Eindringens eines Objekts in eine ein zu schützendes Objekt schalenförmig umgebende Alarmzone. Ein Sender strahlt gepulste elektromagnetische Wellensignale ab, die von einem Objekt reflektiert werden und von einem Empfänger empfangen werden. Hierbei führt das empfangene Signal nur dann zu einer Detektion, wenn es in einem gegenüber dem Sendeimpuls zeitverzögerten Zeitfenster liegt. Durch Verzögerung und Länge des Zeitfensters werden Umfang und Breite der Alarmzone bestimmt. Gemäß einem Ausführungsbeispiel werden zwei in jeweils begrenzte, sich überschneidende Winkelbereiche abstrahlende Sender verwendet, wobei in jeweils zwei hintereinander liegenden Alarmzonen detektiert wird, so dass ein zu schützender Bereich insgesamt allseitig umschlossen ist.

Die US 2008/0165046 A1 beschreibt eine Sensoranordnung mit einer Mehrzahl von UWB-Sensoren, bei denen die von einem Objekt aufgrund von Rückstreuung und/oder Vorwärtsstreuung empfangenen Radarimpulse ausgewertet werden. Gemäß einer Ausführungsform wird ein zu überwachender Raum gemäß einem rechtwinkligen Raster in Raumelemente aufgeteilt und mittels einer Auswerteeinheit die aus jedem dieser Raumelemente reflektierte Radarleistung ausgewertet. Basierend hierauf wird ein dreidimensionales Bild erzeugt. Weitere Ausführungsformen zeigen eine Abdeckung eines zu überwachenden Bereichs durch mehrere sich teilweise überlappende Detektionszonen, wobei jeweils nur das Eindringen eines Objekts in eine solche Detektionszone erfasst wird, jedoch keine nähere Positionsbestimmung erfolgt.

Die WO 2010/086858 A1 offenbart ein niederenergetisches Radarsystem mit einem Signalgenerator sowie entweder einem Sender und einer Gruppe von Empfängern oder einer Gruppe von Sendern und einem Empfänger. Der wenigstens eine Sender strahlt ein gepulstes oder kontinuierliches Radarsignal ab, das von dem wenigstens einen Empfänger empfangen wird. Im Falle mehrerer Sender wird durch Anpassung der Phasenverschiebung zwischen den einzelnen Sendern eine konstruktive Interferenzen in einer gewünschten Abstrahlrichtung erreicht, im Falle mehrerer Empfänger wird durch Phasenverschiebung der empfangenen Signale ein ähnlicher Effekt erzielt.

Der Erfindung liegt daher die Aufgabe zu Grunde, ein Verfahren der eingangs genannten Art dergestalt weiterzubilden, dass mit diesem eine Positionsbestimmung eines Objektes innerhalb eines Überwachungsbereiches im Rahmen einer Präsenz- oder Bewegungsdetektion möglich ist. Gleichermaßen liegt der Erfindung die Aufgabe zu Grunde, eine Überwachungseinrichtung vorzuschlagen, die dieses erlaubt. Dabei steht im Vordergrund des der Erfindung zu Grunde liegenden Problems, dass eine solche Positionsbestimmung auch auf kurzer Distanz möglich ist, sodass sich sowohl das Verfahren als auch die Überwachungseinrichtung eignen, auch im Rahmen einer Gebäudeinstallation eingesetzt werden zu können. Zudem besteht der Wunsch, dass eine solche Überwachungseinrichtung in möglichst einfacher Art und Weise in Betrieb genommen werden kann, insbesondere dann, wenn der Überwachungsbereich in mehrere Einschlussbereiche und Ausschlussbereiche unterteilt werden soll.

Gelöst wird die verfahrensbezogene Aufgabe erfindungsgemäß durch ein Verfahren, bei dem
- zur Präsenz- oder Bewegungsdetektion innerhalb des Überwachungsbereiches zumindest zwei mit horizontalem Abstand zueinander angeordnete und zum Empfangen eines Impuls-RadarSignals ausgelegte Präsenz- oder Bewegungssensoren eingesetzt werden, wobei die Sensoren ausgerichtet sind, damit sich deren Erfassungsbereich zumindest teilweise überschneidet und der von beiden Sensoren erfassbare Bereich den Überwachungsbereich darstellt,
- innerhalb des Überwachungsbereiches zumindest ein Einschlussbereich und/oder zumindest ein Ausschlussbereich definiert wird, dessen Grenze zumindest abschnittsweise in Form von Abstandswertegruppen bei einer Einrichtung der Überwachungseinrichtung systemseitig bekannt gemacht wird, welche Abstandswerte einer Abstandswertegruppe dem Abstand der Grenze an einer bestimmten Stelle von den Sensoren entsprechen, und
   - bei einem Betrieb der Überwachungseinrichtung im Überwachungsmodus durch Vergleich aktuell mit den Sensoren erfasster Abstandwerte zu dem Objekt mit den hinterlegten Abstandswertegruppen festgestellt wird, ob sich das im Überwachungsbereich befindliche Objekt innerhalb oder außerhalb des zumindest einen Einschlussbereiches befindet.

Gleichermaßen wird die Erfindung durch eine Überwachungseinrichtung gelöst, umfassend zumindest zwei mit Abstand zueinander angeordnete Präsenz- oder Bewegungssensoren sowie umfassend eine Sendeeinheit und eine Steuereinheit, welche Sendeeinheit und welche Sensoren mit der Steuereinheit über eine Kommunikationsstrecke in Verbindung stehen, wobei die Sensoren mit horizontalem Abstand zueinander angeordnet und zum Empfangen eines Impuls-Radar-Signals ausgelegt und derart ausgerichtet sind, damit sich deren Erfassungsbereich zumindest teilweise überschneidet und der von allen Sensoren erfassbare Bereich den Überwachungsbereich darstellt, wobei innerhalb des Überwachungsbereiches zumindest ein Einschlussbereich und/oder zumindest ein Ausschlussbereich definiert ist, , dessen Grenze zumindest abschnittsweise in Form von Abstandswertegruppen bei einer Einrichtung der Überwachungseinrichtung systemseitig bekannt machbar ist, welche Abstandswerte einer Abstandswertegruppe dem Abstand der Grenze an einer bestimmten Stelle von den Sensoren entsprechen" wobei bei einem Betrieb der Überwachungseinrichtung im Überwachungsmodus durch Vergleich aktuell mit den Sensoren erfasster Abstandwerte zu einem Objekt mit den hinterlegten Abstandswertegruppen festgestellt wird, ob sich ein im Überwachungsbereich befindliches Objekt innerhalb oder außerhalb des zumindest einen Einschlussbereiches befindet.

bereich und/oder zumindest ein Ausschlussbereich definiert wird, dessen Grenze zumindest abschnittsweise in Form von Abstandswertegruppen bei einer Einrichtung der Überwachungseinrichtung systemseitig bekannt gemacht wird, welche Abstandswerte einer Abstandswertegruppe dem Abstand der Grenze an einer bestimmten Stelle von den Sensoren entspricht, und
- bei einem Betrieb der Überwachungseinrichtung im Überwachungsmodus durch Vergleich aktuell mit den Sensoren erfasster Abstandwerte zu einem Objekt mit den hinterlegten Abstandswertegruppen festgestellt wird, ob sich ein im Überwachungsbereich befindliches Objekt innerhalb oder außerhalb des zumindest einen Einschlussbereiches befindet.

Gleichermaßen wird die Erfindung durch eine Überwachungseinrichtung gelöst, umfassend zumindest zwei mit Abstand zueinander angeordnete Präsenz- oder Bewegungssensoren, wobei die Sensoren mit horizontalem Abstand zueinander angeordnet und zum Empfangen eines Impuls-RadarSignals ausgelegt und derart ausgerichtet sind, damit sich deren Erfassungsbereich zumindest teilweise überschneidet und der von allen Sensoren erfassbare Bereich den Überwachungsbereich darstellt, wobei innerhalb des Überwachungsbereiches zumindest ein Einschlussbereich definiert ist, sowie umfassend eine Impuls-Radar-Sendeeinheit und eine Steuereinheit, welche Sendeeinheit und welche Sensoren mit der Steuereinheit über eine Kommunikationsstrecke in Verbindung stehen.

Bei diesem Verfahren - gleiches gilt für die beanspruchte Überwachungseinrichtung - werden wenigstens zwei Präsenz- oder Bewegungssensoren eingesetzt, deren Erfassungsbereich sich zumindest teilweise überlappt. Der überlappende Erfassungsbereich der Sensoren stellt den Überwachungsbereich dar, der von der Überwachungseinrichtung überwacht werden kann. Die zumindest zwei Sensoren sind zum Empfangen eines Impuls-Radar-Signals, etwa eines UWB-Signals ausgelegt und mit horizontalem Abstand zueinander angeordnet. Dieses ermöglicht eine Positionsbestimmung eines Objektes innerhalb des Überwachungsbereiches. Es versteht sich, dass der Überwachungseinrichtung ebenfalls eine Sendeeinheit mit einer Sendeantenne zugehörig ist, um ein Impuls-Radar-Signal, beispielsweise ein UWB-Signal in den Erfassungsbereich der Sensoren zu senden. Zu diesem Zweck kann vorgesehen sein, dass jeder Präsenzoder Bewegungssensor zum Senden von Impuls-Radar-Signalen ausgelegt ist. Möglich ist auch eine Auslegung, dass nur ein Sensor ein solches Signal sendet und dieser oder auch nur die anderen Sensoren das an einem im Überwachungsbereich befindlichen Objekt reflektierte Signal als Empfangssignal empfangen. Auch ist es möglich, eine separate Sendeeinheit neben zumindest zwei Präsenz- oder Bewegungssensoren vorzusehen, die sodann nur als Empfangssensoren ausgebildet sein müssen.

Das Verfahren sowie die Überwachungseinrichtung verwenden bzw. arbeiten mit Impuls-Radar-Signalen, beispielsweise mit UWB-Signalen. Vor dem Hintergrund des eingangs gewürdigten Standes der Technik kann auf diese Weise unter Vermeidung der zum Stand der Technik aufgezeigten Nachteile eine Positionsbestimmung innerhalb eines Überwachungsbereiches mit Verwendung von Radar-Signalen vorgenommen werden, und zwar vor allem auch in geringen Entfernungen, sodass sich dieses Verfahren und die Überwachungseinrichtung vor allem auch zur Implementierung in Gebäudeinstallationen eignen.

Die Positionsbestimmung innerhalb des Überwachungsbereiches erfolgt typischer Weise mit an sich bekannten Triangulationsalgorithmen. Auf diese Weise ist in Abhängigkeit von der Anzahl und der Anordnung der eingesetzten Sensoren eine zweidimensionale oder auch eine dreidimensionale Erfassung eines im Überwachungsbereich befindlichen Objektes durch Ermittlung der mindestens zwei Abstände bzw. Radien möglich. Bei dem beanspruchten Verfahren steht im Vordergrund, dass die Positionsbestimmung benutzt wird, um festzustellen, ob sich ein im Überwachungsbereich befindliches Objekt in einem innerhalb des Überwachungsbereiches definierten Einschlussbereich befindet oder nicht. Der Bereich innerhalb des Überwachungsbereiches, der keinen Einschlussbereich darstellt, ist im Rahmen dieser Ausführungen als Ausschlussbereich angesprochen.

Die zumindest zwei Empfangssensoren sind mit einem horizontalen Abstand zueinander angeordnet, damit eine Positionsbestimmung in der typischerweise horizontalen Ebene des Überwachungsbereiches vorgenommen werden kann. Ist zudem eine Höhebestimmung gewünscht, sind die Sensoren auch mit vertikalem Abstand zueinander angeordnet.

Es versteht sich, dass bei einem sich im Überwachungsbereich bewegenden Objekt mit diesem Verfahren bzw. mit dieser Überwachungseinrichtung festgestellt werden kann, ob sich dieses aus dem Ausschlussbereich kommend dem Einschlussbereich nähert und dessen Grenze übertritt oder umgekehrt den Einschlussbereich verlässt und in den Ausschlussbereich eintritt. Je nach Einrichtung des Systems kann sich die Grenze des Überwachungsbereiches im Bereich des Bodens oder auch oberhalb des Bodens befinden. Bei einer Anwendung des Verfahrens oder auch der Überwachungseinrichtung im Rahmen einer Gebäudeinstallation, wenn diese beispielsweise zum Überwachen einer Tür oder dergleichen vorgesehen ist, besteht die Möglichkeit, die Grenze zwischen dem Einschlussbereich und dem diesbezüglich außerhalb liegenden Bereich - dem Ausschlussbereich - für solche Objekte als relevant zu definieren, die eine bestimmte Größe aufweisen. Tritt beispielsweise eine Person, die dem Größenkriterium (Höhenkriterium) genügt, in den Einschlussbereich des Überwachungsbereiches ein, kann dieses das Öffnen einer Tür, das Anschalten einer Beleuchtung beispielsweise in einem angrenzenden Flur oder dergleichen zur Folge haben. Tritt hingegen ein Objekt geringer Größe, etwa ein Haustier in den Einschlussbereich ein, wird dieses zwar erfasst. Da dieses jedoch nicht dem Höhenkriterium genügt, wird in einem solchen Fall die an eine Grenzüberschreitung in den Einschlussbereich hinein (oder auch aus den Einschlussbereich hinaus) gekoppelte Aktoransteuerung ausbleiben. Insofern kann mit einer solchen Überwachungseinrichtung auch eine sicherheitsrelevante Überwachung erfolgen, und zwar in Bezug auf beispielsweise Kleinkinder oder Babys. Wenn diese sich in den Einschlussbereich des Überwachungsbereiches begeben wird sodann ebenso wie bei einem Haustier die ansonsten bei größeren detektierten Objekten vorgesehene Aktoransteuerung nicht vorgenommen. Beispielsweise wird dann die Tür nicht geöffnet. Bei dem vorbeschriebenen Anwendungsbeispiel bildet der Einschlussbereich einen Bereich des insgesamt größeren Überwachungsbereiches, der der Tür nahe ist. Es versteht sich, dass sich ein solcher Einschlussbereich innerhalb eines Überwachungsbereiches auch in anderen Situationen sinnvoll eingesetzt werden kann. Mit diesem Verfahren und mit dieser Überwachungseinrichtung können auch gleichzeitig mehrere Einschlussbereiche innerhalb des Überwachungsbereiches definiert und überwacht werden. Möglich ist in diesem Zusammenhang auch, dass innerhalb eines Ausschlussbereiches ein oder mehrere Einschlussbereichsinseln angeordnet sind, ebenso wie in einem Einschlussbereich ein oder mehrere Ausschlussbereichsinseln.

Eingerichtet wird die Grenze des Einschlussbereiches zu den benachbarten außen liegenden Überwachungsbereich dadurch, dass die Grenze in Form von Abstandswertegruppen, also beispielsweise bei einem Einsatz von zwei Präsenz- oder Bewegungssensoren von Abstandswertepaaren, systemseitig bekannt gemacht werden. Bei einer solchen Abstandswertegruppe handelt es sich um die von den Sensoren zu einem in dem Überwachungsbereich befindlichen Objekt erfassten Abstandsdaten. Diese können nach Art einer Tabelle gespeichert werden, wobei in die Positionsbestimmung diejenigen Abstandsdaten eingehen, die die Sensoren infolge eines zuvor definierten Sendens eines Impuls-Radar-Signals erfasst haben. Gleiches gilt für die Definition der Grenze zwischen Einschlussbereich und Ausschlussbereich. Somit ist die Grenze zum Einschlussbereich durch eine Vielzahl derartiger Abstandswertegruppen definiert. Bei einem Betrieb der Überwachungseinrichtung kann sodann auf einfache Weise und mit wenig rechenintensiven Schritten ermittelt werden, ob ein in einem Messtakt erfassten Abstandswerte der beteiligten Sensoren als aktuelle Abstandswertegruppe einer Objektposition zuzuordnen ist, welche sich innerhalb oder außerhalb eines Einschlussbereiches und /oder eines Ausschlussbereiches befindet. Dieses kann auf Grund eines einfachen Vergleiches mit den systemseitig hinterlegten, die Grenze des Einschlussbereiches definierenden Abstandswertegruppen erfolgen. Da eine solche Rechenoperation in aller Regel nur geringe Ressourcen benötigt, braucht die zum Steuern des Verfahrens bzw. der Überwachungseinrichtung notwendige Steuereinheit nicht besonders aufwendig konzipiert zu sein. Dieses wiederum ermöglicht etwa auch die Ausbildung, ohne größeren Bauraum zu benötigen, dass einer der Sensoren die Auswertefunktionalität übernimmt, so dass dann kein gesondertes Steuermodul installiert werden muss.

Die Sensoren stehen mit der Steuereinheit in Kommunikationsverbindung, damit der von jedem Sensor in einem Messtakt ermittelte Abstandswert zu einem innerhalb des Überwachungsbereiches befindlichen Objekt in Folge des Empfangs eines an dem Objekt reflektierten beispielsweise als UWB-Signal ausgebildeten Impuls-Radar-Signals an die Steuereinheit übermitteln kann. Diese Kommunikation kann über eine physische Installation, beispielsweise über einen Bus erfolgen. Eine Übermittlung des Abstandswertes an die Steuereinheit ist auch ohne eine solche physische Kommunikationsstrecke möglich, beispielsweise unter Verwendung elektromagnetischer Wellen, also: etwa auf einer Funkübertragungsstrecke. Bei einer solchen Ausgestaltung kann vorgesehen sein, dass einer der Sensoren als Master-Sensor definiert wird. Dieser ist ausgelegt, nicht nur die von einem im Überwachungsbereich befindlichen Objekt reflektierten UWB-Signale zu empfangen, sondern zudem die UWB-Sendesignale des oder der weiteren Sensoren der Überwachungseinrichtung. In einem solchen Fall können die UWB-Sendesignale des oder der weiteren Sensoren kodiert sein, und zwar kodiert um eine Abstandsinformation. Bei diesem UWB-Sendesignal des zumindest einen weiteren Sensors handelt es sich typischerweise um dasjenige Signal, welches dieser Sensor ohnehin zum Zwecke der Abstandsermittlung zu einem Objekt in den Überwachungsbereich sendet. Der Master-Sensor empfängt das kodierte UWB-Signal des zumindest einen anderen Sensors und kann die darin enthaltene Abstandsinformation auswerten. Die übermittelte Abstandsinformation ist typischerweise diejenige, die in dem vorangegangenen Messtakt zu einem im Überwachungsbereich befindlichen Objekt von diesem Sensor ermittelt worden ist. Es versteht sich, dass, wenn sich innerhalb des Überwachungsbereiches kein Objekt befindet, die Abstandsinformation entsprechend ebenfalls kodiert sein kann.

Eingerichtet wird gemäß einem Ausführungsbeispiel die Grenze des zumindest einen Einschlussbereiches dadurch, dass die Überwachungseinrichtung in einen Einlernmodus (einen sogenannten Teach-In-Modus) geschaltet wird und anschließend ein Objekt an der einzurichtenden Grenze entlang bewegt wird oder sich dort selbst entlang bewegt. Bevorzugt wird die Überwachungseinrichtung mittels einer Fernbedienung in ihren TeachIn-Modus geschaltet. Dabei kann vorgesehen sein, dass sich das Objekt kontinuierlich bewegt oder an bestimmten Punkten der Grenze für die Zeit des Einmessens verbleibt. Je nach Auslegung des Systems kann es sich bei dieser Grenze um eine zweidimensionale Grenze, eine Fläche oder ein Volumenelement handeln. Die für die Definition des Einschlussbereiches eingesetzten Sensoren führen in einem vorgegebenen Takt eine Entfernungsmessung durch. Der von jedem Sensor ermittelte Abstandswert wird sodann mit den Abstandswerten des oder der weiteren Sensoren aus demselben Messtakt als Abstandswertegruppe systemseitig hinterlegt. Im Zusammenhang mit dem Teach-In können ein oder mehrere Einschlussbereiche und Ausschlussbereiche definiert werden, wobei die von den einzelnen Sensoren ermittelten Abstandswerte abgespeichert werden, um in einem nachfolgenden Betriebsmodus eine Vergleichsgrundlage zu haben, anhand der entschieden wird, ob sich ein Objekt in einem Einschlussbereich oder einem Ausschlussbereich befindet. Aus den die Einschlussbereiche und Ausschlussbereiche definierenden Abstandswerten werden systemseitig die Einschluss- und/oder Ausschlussbereiche berechnet. Derartige Berechnungen können in einer zentralen Steuereinrichtung durch einen eine solche Funktionalität aufweisenden Sensor vorgenommen werden. In Abhängigkeit von dem benötigten Rechenaufwand, kann eine solche Berechnung auch außerhalb des Systems vorgenommen werden. In einem solchen Fall besteht zwischen dem System und einer solche Rechnereinheit eine entsprechende Kommunikationsverbindung, wobei zu diesem Zweck bei einer Verwendung eines solchen Systems im Rahmen einer Gebäudeinstallation als Kommunikationsstrecke das Intranet benutzt werden kann. Bei einer solchen Auslagerung von Rechenkapazität bildet diese sodann eine "Cloud" in Bezug auf das eigentliche Verfahren bzw. System. Das Auslagern von Rechenkapazität in eine Zentralrechen oder eine "Cloud" bietet sich vor allem an, wenn mehrere oder eine Vielzahl von Sensoren Teil einer Überwachungseinrichtung und/oder eine Mehr- oder Vielzahl von Überwachungseinrichtungen vorgesehen sind. Dann benötigen die Sensoren keine größere Rechenkapazität und können kostengünstig hergestellt werden.

Je nach Konfigurierung des Überwachungsbereiches in ein oder mehrere Einschlussbereiche und/oder ein oder mehrere Ausschlussbereiche wird man typischerweise diejenigen Bereiche definieren, deren Definition einen geringeren Inbetriebnahmeaufwand erfordert. Wenn beispielsweise in einem Durchgangsbereich ein Ausschlussbereich, die übrigen Bereiche jedoch als Einschlussbereich definiert werden sollen, ist der Teach-InAufwand geringer, wenn nur die Grenze des Ausschlussbereiches definiert wird, verglichen mit einem Teach-In, bei dem die Einschlussbereiche definiert werden würden. Ebenfalls ist eine Kombination möglich.

Mit diesem Verfahren können beliebig konturierte Grenzen oder auch Grenzflächen definiert werden. Ist vorgesehen, dass in einem Abschnitt die Grenze des Einschlussbereiches einen geraden Verlauf hat, wird es als ausreichend angesehen, wenn zur Einrichtung der Grenze die Endpunkte des geraden Abschnittes eingemessen werden. Der dazwischen befindliche Abschnitt der Grenze kann rechnerisch ermittelt werden. Entsprechend geringer ist der benötigte Speicherbedarf für das Ablegen der Abstandswertegruppen.

Betrieben wird das Verfahren und die Überwachungseinrichtung vorzugsweise mit UWB-Signalen aus dem Frequenzbereich 3 - 10 GHz, insbesondere 3 - 5 GHz oder 6 - 8 GHz. Der Abstand der Präsenz- oder Bewegungssensoren voneinander entspricht zumindest einer Wellenlänge. Dieses erlaubt, dass bei Verwendung des vorgenannten Frequenzbereiches die Sensoren mit einem Abstand von wenigen Zentimetern zueinander angeordnet werden können. Dieses wiederum ermöglicht die Ausbildung einer Überwachungseinrichtung, bei der zumindest die Sendeeinheit nebst Sendeantenne und den mehreren Empfangssensoren in einem kompakten Überwachungsmodul vereint sind. Diesbezüglich kann beispielsweise vorgesehen sein, eine einzige Impuls-Radar-Sendeeinheit einzusetzen und benachbart zu diesem zumindest zwei Empfangssensoren anzuordnen. Die Steuereinheit kann ebenfalls Teil eines solchen Überwachungsmoduls sein. Wenn ein solches Modul zum Steuern von Aktoren einer Gebäudeinstallation vorgesehen ist, ist dieses typischerweise an den gebäudeseitigen Installationsbus angeschlossen. Eine Auswertung kann dann auch in einer gebäudeseitig zentral installierten Steuer- und Auswerteeinheit erfolgen. Von dieser kann sodann wenn erforderlich, eine Aktoransteuerung erfolgen. Gemäß einer anderen Ausgestaltung erfolgt die Auswertung der erfassten Abstandswerte einer Überwachungseinrichtung durch eine der Überwachungseinrichtung unmittelbar zugeordnete Auswerteeinheit.

Die Erfindung ist nachfolgend anhand eines Ausführungsbeispiels unter Bezugnahme auf die beiliegenden Figuren beschrieben. Es zeigen:
- **Fig. 1:**: Eine schematisierte Darstellung eines Teils eines Raumes mit einer Tür zu einem angrenzenden Flur mit einer Überwachungseinrichtung,
- **Fig. 2:**: in einer schematisierten Darstellung ein Überwachungsmodul und
- **Fig. 3:**: eine schematisierte Darstellung eines weiteren Raumbereiches einer Überwachungseinrichtung und einer anders konfigurierten Überwachungsbereich.

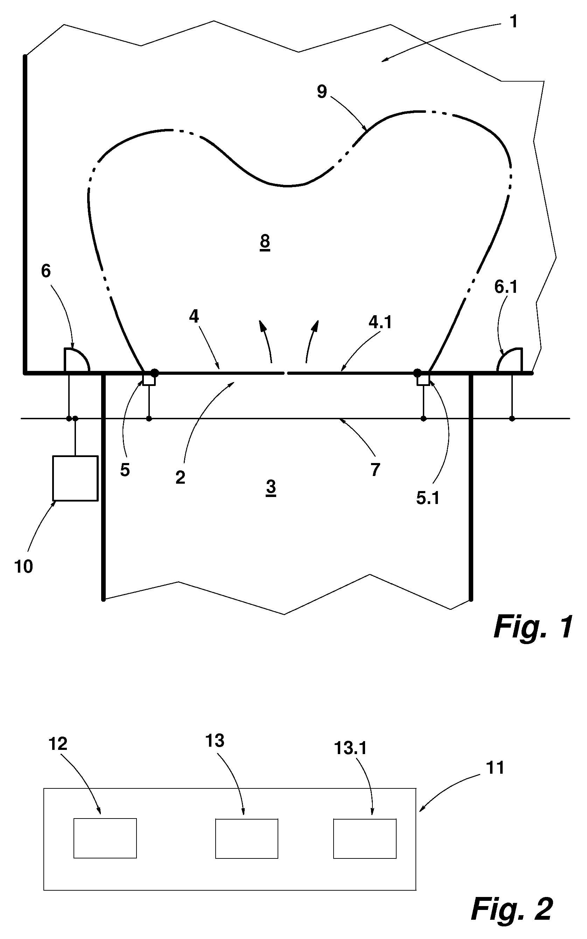

Ein Raum 1 eines im Übrigen nicht näher dargestellten Gebäudes ist über eine Doppeltür 2 mit einem angrenzenden Flurtrakt 3 verbunden. In Figur 1 sind die beiden Türen 4, 4.1 der Doppeltür 2 geschlossen. Diese sind in an sich bekannter Art und Weise schwenkbar aufgehängt und können bei dem dargestellten Ausführungsbeispiel in Richtung in den Raum 1 hinein, wie durch die Pfeile angedeutet, aufgeschwenkt werden. Die Türen 4, 4.1 sind zwar auch manuell betätigbar, sind jedoch jeweils an einen Türaktoren 5, 5.1 angeschlossen.

Installiert ist in dem Raum 1 eine Überwachungseinrichtung. Die bei dem dargestellten Ausführungsbeispiel der Figur 1 verwendete Überwachungseinrichtung umfasst zwei Präsenz- oder Bewegungssensoren 6, 6.1. Die Sensoren 6, 6.1 sind mit horizontalem Abstand zueinander angeordnet und befinden sich rechts und links neben der Doppeltür 2 mit Abstand zu der jeweiligen Tür 4 bzw. 4.1. Bei den beiden Sensoren 6, 6.1 handelt es sich um solche, die jeweils ein als UWB-Sendeeinheit ausgeführtes Impuls-Radar nebst Sendeantenne und ein UWB-Empfänger umfassen. Zusätzlich verfügt jeder Sensor 6, 6.1 über eine bei dem dargestellten Ausführungsbeispiel als Koppelfaktor ausgeführte Auswerteeinheit. Diese dient dem Zweck, eine Signalfilterung vorzunehmen und nur diejenigen Signale einer nachgeschalteten Entfernungsbestimmung zuzuführen, die eine hinreichende Übereinstimmung mit dem Sendesignal aufweisen. Der Korrelator ist Teil der Empfangseinheit.

Die beiden Sensoren 6, 6.1 sind an einen Installationsbus 7 angeschlossen. Angeschlossen an den Installationsbus 7 sind ebenfalls die Türaktoren 5, 5.1. mit diesen können die Türen 4 bzw. 4.1 selbsttätig geöffnet und geschlossen werden. Der Installationsbus 7 des dargestellten Ausführungsbeispiels ist Teil des gebäudeseitigen Installationsbusses. Der in den Figuren dargestellte Installationsbus 7 stellt lediglich eines von mehreren Ausführungsbeispielen dar. Ebenso möglich ist es, dass die Busverbindung nur zwischen den systemseitigen Komponenten gegeben ist. Ist die Überwachungseinrichtung, wie in Figur 1 gezeigt, an den gebäudeseitigen Installationsbus 7 angeschlossen, können Funktionalitäten, beispielsweise Rechenkapazitäten auch von andern Busteilnehmern, beispielsweise einem Zentralrechner übernommen werden. Anstelle des leitungsgebundenen Bussystem können ebenfalls ganz oder teilweise auch Funkverbindungen eingesetzt werden.

Die Überwachungseinrichtung mit ihren Sensoren 6, 6.1 dient zum Überwachen des Bereiches des Raumes 1 vor der Doppeltür 2. Zu diesem Zweck sind die Sensoren 6, 6.1 hinsichtlich ihres Erfassungsbereiches derart ausgerichtet, dass dieser zumindest teilweise überlappt. Der von beiden Sensoren 6, 6.1 überlappende Erfassungsbereich stellt in Bezug auf die Beschreibung der Erfindung den Überwachungsbereich dar. Es versteht sich, dass jedem Sensor 6, 6.1 auch ein größerer individueller Überwachungsbereich zugeordnet sein kann. Im Rahmen dieser Ausführungen ist jedoch nur der überlappende Erfassungsbereich von Interesse. Innerhalb des überlappenden Erfassungsbereiches ist ein Einschlussbereich 8 definiert. Dieser ist in der schematischen Darstellung der Figur 1 durch eine Grenze 9 gegenüber den übrigen Bereichen des Raumes getrennt. Diese übrigen Bereiche des Raumes, soweit diese in den Überwachungsbereich fallen, sind als Ausschlussbereiche anzusprechen. Bei der Grenze 9 handelt es sich um eine virtuelle Grenze, die tatsächlich nicht visuell erkennbar ist. Durch die Überwachungseinrichtung soll erfasst werden, wann ein Objekt, beispielsweise eine Person, die Grenze 9 in Richtung zu der Doppeltür 2 hin übertritt, damit bei Detektion einer solchen Situation die Türen 4, 4.1 geöffnet werden können. Bei dem dargestellten Ausführungsbeispiel ist die Grenze 9 unsymmetrisch herzförmig. Es versteht sich, dass sich mit dem Verfahren und der Überwachungseinrichtung in beliebigen Grenzen Einschlussbereiche und Ausschlussbereiche definieren lassen. Dieses wurde bei diesem Ausführungsbeispiel gewählt, da die Türen 4, 4.1 in den Raum 1 hinein öffnen. Geht eine Person aus dem Raum 1 in Richtung zu der Doppeltür 2 schräg zu dieser, überschreitet er die Grenze 9 früher, verglichen mit einer Situation, bei der er gerade auf die geschlossenen Türen 4, 4.1 zugeht. Berücksichtigt ist bei der Geometrie der Auslegung des Einschlussbereiches 8 mit seiner Grenze 9 die Öffnungsbewegung der Türen 4 bzw. 4.1, wenn eine Person schräg auf die Doppeltür 2 zugeht.

Die Grenze 9 wird anhand von Abstandswertepaaren systemseitig erfasst und hinterlegt. Zu diesem Zweck ist Teil der Überwachungseinrichtung eine Steuereinheit 10 mit einer entsprechenden Speichereinrichtung. Die Steuereinheit 10 ist ebenfalls an den Installationsbus 7 angeschlossen. Die Grenze 9 wird bei der Einrichtung oder Inbetriebnahme der Überwachungseinrichtung dadurch systemseitig bekannt gemacht, dass eine Person sich entlang der einzurichtenden Grenze, hier: den Grenzverlauf 9 langsam entlang schreitet und während dieser Zeit die Sensoren 6, 6.1 synchron eine Abstandsmessung zu der Person durchführen. Die Überwachungseinrichtung befindet sich zu diesem Zweck in ihrem Einlernmodus, in den diese zuvor geschaltet worden ist. Die in einem Messtakt erfassten Abstandswerte des Sensors 6, 6.1 werden als Abstandswertepaare hinterlegt. Die Vielzahl der auf diese Weise hinterlegten Abstandswertepaare definiert den Verlauf der Grenze 9 und damit die Erstreckung des Einschlussbereiches 8. Die Grenze 9 bzw. der Verlauf der Grenze 9 ist somit durch die zur Festlegung derselben hinterlegten Abstandswertepaare definiert.

Alternativ kann auch vorgesehen sein, dass eine die Einrichtung der Überwachungseinrichtung vornehmende Person der Grenze entlang schreitet und an bestimmten Punkten mittels eines Impuls-Radar-Senders, etwa eines UWB-Senders selbst ein Signal sendet. Ausgewertet wird dann die Laufzeit des Signals von diesem Signalgeber zu den jeweiligen Sensoren 6 bzw. 6.1.

Bei einem Betrieb der Überwachungseinrichtung wird bei Erfassen eines Objektes im Überwachungsbereich ausgewertet, ob sich dieses außerhalb des Einschlussbereiches oder bereits innerhalb des Einschlussbereiches befindet. Eine solche Auswertung erfolgt durch Vergleich anhand aktuell durch die Sensoren 6, 6.1 erfasster Abstandswertepaare mit den systemseitig hinterlegten.

Nachfolgend ist eine von mehreren Möglichkeiten, das Verfahren zu betreiben bzw. die Überwachungseinrichtung zu nutzen beschrieben: Wird detektiert, dass eine Person die Grenze 9 in Richtung zur Doppeltür 2 hin überschreitet bzw. überschritten hat, werden durch die Steuereinheit 10 die Türaktoren 5, 5.1 zum Öffnen der Türen 4, 4.1 angesteuert. Infolge des Erfassens der Position und vor allem der sich ändernden Position einer sich der Doppeltür 2 nähernden Person kann vorgesehen sein, auch nur eine der beiden Türen 4, 4.1 anzusteuern, und zwar diejenige, die der sich der Doppeltür 2 nähernden Person näher ist.

In einer Weiterbildung des Ausführungsbeispiels der Figur 1 ist vorgesehen, dass mit weiteren Sensoren auch der Bereich vor der Doppeltür 2 im Flurtrakt 3 in derselben Art und Weise überwacht wird. Bei einer solchen Auswertung ist es möglich, je nachdem, von welcher Seite sich eine Person der Doppeltür nähert, die Türen 4, 4.1 oder auch nur eine der beiden in die eine oder andere Richtung zu öffnen, beispielsweise in diejenige Richtung, in die sich die Person bewegt. Es versteht sich, dass bei einer solchen Ausgestaltung prinzipiell die Türen 4, 4.1 in beide Richtungen aufschwenkbar ausgelegt sein müssen.

Gemäß einer weiteren Ausgestaltung ist vorgesehen, die Komponenten der Überwachungseinrichtungen kompakt in einem Überwachungsmodul 11 anzuordnen. Bei dem in Figur 2 diesbezüglich dargestellten Ausführungsbeispiel umfasst das Überwachungsmodul 11 eine als UWB-Sendeeinheit 12 ausgeführte Impuls-Radar-Sendeeinheit sowie zwei Empfangseinheiten 13, 13.1. Je nach gewünschter Positionsbestimmung können in einem solchen Überwachungsmodul auch mehrere Empfangseinheiten angeordnet sein. Von Vorteil bei einem solchen Überwachungsmodul ist, dass sämtliche Komponenten in einem Modul vereint sind und daher die Installation vereinfacht ist. Typischerweise umfasst ein solches Überwachungsmodul ebenfalls die Steuereinheit. Angeschlossen ist das Überwachungsmodul an den gebäudeseitigen Installationsbus, um über die den oder die in Abhängigkeit von einer bestimmten Situation anzusteuernden Aktoren anzusteuern.

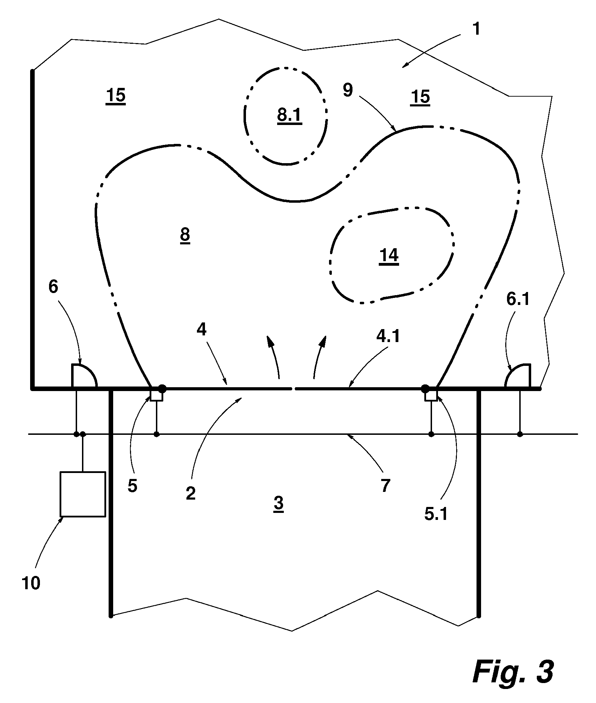

Beispielhaft ist in Figur 3 der Überwachungsbereich des Raumes 1 anders in Einschlussbereiche und Ausschlussbereiche aufgeteilt als in Figur 1. Innerhalb des Einschlussbereiches 8 befindet sich ein Ausschlussbereich 14. Dieser stellt eine Ausschlussbereichsinsel innerhalb des Einschlussbereiches 8 dar. Darüber hinaus ist neben dem Einschlussbereich 8 ein zweiter Einschlussbereich 8.1 definiert, der seinerseits eine Einschlussbereichsinsel innerhalb des Ausschlussbereiches 15 bildet.

Die vorstehenden Bereichsdefinitionen sind nur beispielhaft. Mit dem Verfahren und der Überwachungseinrichtung lassen sich beliebige Bereiche konfigurieren.

### Bezugszeichenliste

- 1: Raum
- 2: Doppeltür
- 3: Flurtrakt
- 4,4.1: Tür
- 5,5.1: Türaktor
- 6,6.1: Sensor
- 7: Installationsbus
- 8,8.1: Einschlussbereich
- 9: Grenze
- 10: Steuereinheit
- 11: Überwachungsmodul
- 12: Sendeeinheit
- 13, 13.1: Empfangseinheit
- 14: Ausschlussbereich
- 15: Ausschlussbereich

## Patentansprüche

1. Verfahren zum Detektieren eines Objekts innerhalb eines einem Präsenz- oder Bewegungssensor zugeordneten Erfassungsbereiches umfassend: Generieren und Senden eines Radar-Signals, Empfang eines von einem in Detektionsreichweite befindlichen Objekt reflektierten Signals (Empfangssignal) und Auswerten desselben in Bezug auf seine Entfernung zu den Sensoren, wobei zur Präsenz- oder Bewegungsdetektion innerhalb des Überwachungsbereiches zumindest zwei mit horizontalem Abstand zueinander angeordnete und zum Empfangen eines Impuls-Radar-Signals ausgelegte Präsenz- oder Bewegungssensoren eingesetzt werden, wobei die Sensoren (6, 6.1) ausgerichtet sind, damit sich deren Erfassungsbereich zumindest teilweise überschneidet und der von beiden Sensoren erfassbare Bereich den Überwachungsbereich darstellt,
- **dadurch gekennzeichnet, dass** innerhalb des Überwachungsbereiches zumindest ein Einschlussbereich (8, 8.1) und/oder zumindest ein Ausschlussbereich (14, 15) definiert wird, dessen Grenze zumindest abschnittsweise in Form von Abstandswertegruppen bei einer Einrichtung der Überwachungseinrichtung systemseitig bekannt gemacht wird, welche Abstandswerte einer Abstandswertegruppe dem Abstand der Grenze an einer bestimmten Stelle von den Sensoren (6, 6.1) entsprechen, und
- dass bei einem Betrieb der Überwachungseinrichtung im Überwachungsmodus durch Vergleich aktuell mit den Sensoren (6, 6.1) erfasster Abstandwerte zu dem Objekt mit den hinterlegten Abstandswertegruppen festgestellt wird, ob sich das im Überwachungsbereich befindliche Objekt innerhalb oder außerhalb des zumindest einen Einschlussbereiches (8, 8.1) befindet.

2. Verfahren nach Anspruch 1, **dadurch gekennzeichnet, dass** zum Einrichten des zumindest eines Einschlussbereiches (8, 8.1) die Überwachungseinrichtung in einen Einlernmodus geschaltet wird und ein Objekt an der gewünschten Begrenzung des Einschlussbereiches (8, 8.1) und/oder des zumindest eine Ausschlussbereiches (14, 15) entlang bewegt wird oder sich dort entlang bewegt, während die Sensoren (6, 6.1) in einem vorgegebenen Takt eine Entfernungsmessung durchführen und dass die von den Sensoren (6, 6.1) in einem Takt ermittelten Abstandswerte zum Objekt als Abstandwertegruppe systemseitig hinterlegt werden.

3. Verfahren nach Anspruch 2, **dadurch gekennzeichnet, dass** bei der Festlegung der Grenze (9) des Einschlussbereiches (8, 8.1) das Objekt an der gewünschten Begrenzung kontinuierlich entlang bewegt wird oder sich dort kontinuierlich entlang bewegt und dass die Sensoren (6, 6.1) in dem vorgegebenen Takt synchron oder zumindest weitgehend synchron die Entfernungsmessung durchführen.

4. Verfahren nach einem der Ansprüche 1 bis 3, **dadurch gekennzeichnet, dass** einer der Sensoren (6, 6.1) als Master-Sensor definiert wird, welches Master-Sensor für die Steuerung der Überwachungseinrichtung zuständig ist und der zumindest eine Slave-Sensor die von ihm ermittelten Abstandswerte und den Master-Sensor übermittelt.

5. Verfahren nach Anspruch 4, **dadurch gekennzeichnet, dass** der zumindest eine Slave-Sensor die von ihm ermittelten Abstandswerte in Form von diesbezüglich kodierten Impuls-Radar-Signalen an den Master-Sensor übermittelt.

6. Verfahren nach Anspruch 5, **dadurch gekennzeichnet, dass** die von dem zumindest einen Slave-Sensor zur Abstandermittlung gesendeten Impuls-Radar-Signale bezüglich des in einem vorherigen Takt, insbesondere in dem unmittelbar vorangegangenen Takt erfassten Abstandswertes kodiert sind.

7. Verfahren nach einem der Ansprüche 1 bis 6, **dadurch gekennzeichnet, dass** als Impuls-Radar-Signal UWB-Signale gesendet werden.

8. Überwachungseinrichtung umfassend zumindest zwei mit Abstand zueinander angeordnete Präsenz- oder Bewegungssensoren sowie umfassend eine Sendeeinheit und eine Steuereinheit (10), welche Sendeeinheit und welche Sensoren (6, 6.1) mit der Steuereinheit (10) über eine Kommunikationsstrecke in Verbindung stehen, wobei die Sensoren (6, 6.1) mit horizontalem Abstand zueinander angeordnet und zum Empfangen eines Impuls-Radar-Signals ausgelegt und derart ausgerichtet sind, damit sich deren Erfassungsbereich zumindest teilweise überschneidet, wobei der von allen Sensoren erfassbare Bereich den Überwachungsbereich darstellt, **dadurch gekennzeichnet, dass** innerhalb des Überwachungsbereiches zumindest ein Einschlussbereich (8, 8.1) und/oder zumindest ein Ausschlussbereich (14, 15) definiert ist, dessen Grenze zumindest abschnittsweise in Form von Abstandswertegruppen bei einer Einrichtung der Überwachungseinrichtung systemseitig bekannt machbar ist, welche Abstandswerte einer Abstandswertegruppe dem Abstand der Grenze an einer bestimmten Stelle von den Sensoren (6, 6.1) entsprechen" wobei bei einem Betrieb der Überwachungseinrichtung im Überwachungsmodus durch Vergleich aktuell mit den Sensoren (6, 6.1) erfasster Abstandwerte zu einem Objekt mit den hinterlegten Abstandswertegruppen festgestellt wird, ob sich ein im Überwachungsbereich befindliches Objekt innerhalb oder außerhalb des zumindest einen Einschlussbereiches (8, 8.1) befindet.

9. Überwachungseinrichtung nach Anspruch 8, **dadurch gekennzeichnet, dass** jeder der Sensoren (6, 6.1) über eine Sendeeinheit mit einem Impuls-Radar-Signalgenerator verfügt.

10. Überwachungseinrichtung nach einem der Ansprüche 8 oder 9, **dadurch gekennzeichnet, dass** die Steuereinheit (10) einem der Sensoren (6, 6.1) zugeordnet ist, welcher Sensor (6, 6.1) in Bezug auf den oder die anderen Sensoren (6, 6.1) als Master eingerichtet ist, und dass der oder die anderen Sensoren (6, 6.1) zu dem Master-Sensor in einem Slave-Verhältnis eingerichtet sind.

11. Überwachungseinrichtung nach einem der Ansprüche 8 bis 10, **dadurch gekennzeichnet, dass** die Sendeeinheit (12) und die mehreren Sensoren (13, 13.1) in einem Überwachungsmodul (11) vereint sind.

## Claims

1. Process for detection of an object within a monitored area allocated to a presence or motion sensor, comprising: generating and sending of a radar signal, reception of a signal reflected by an object within the detection range (reception signal) and evaluation of the same with regard to its distance to the sensors, wherein for presence or motion detection within the monitored area at least two presence or motion detectors are used which are arranged in horizontal distance to one another and designed to receive an impulse-radarsignal, wherein the sensors (6, 6.1) are aligned in a way that their detection ranges at least partly overlap and that the area monitored by both sensors is the monitored area, **characterized by the fact** that within the monitored area at least one inclusion area (8, 8.1) and/or at least one exclusion area (14, 15) is defined whose edge, at least partially, is made known to the system as distance value groups during setting up of the monitoring installation, wherein the distance values of a distance value group correspond to the distance between the edge and the sensors (6, 6.1) at a certain point, and that during operation of the monitoring installation in monitoring mode by comparison of the current distance to the object detected by the sensors (6, 6.1) with the stored distance value groups it is determined whether the object in the monitoring area is inside or outside the at least one inclusion area (8, 8.1).

2. Process in accordance with Claim 1, **characterized by the fact** that to setup the at least one inclusion area (8, 8.1) the monitoring installation is switched into a learning mode and that an object is moved or moves along the edge of the inclusion area (8, 8.1) and/or the at least one exclusion area (14, 15), while the sensors (6, 6.1) carry out a distance measurement in a given pulse and that the distance values to the object determined in a pulse by the sensors (6, 6.1) are memorized in the system as distance value group.

3. Process in accordance with Claim 2, **characterized by the fact** that with definition of the edge (9) of the inclusion area (8, 8.1) the object is moved continuously or moves continuously along the desired edge, and that the sensors (6, 6.1) carry out the distance measurement synchronically or at least mostly synchronically in a given pulse.

4. Process in accordance with any of Claims 1 to 3, **characterized by the fact** that one of the sensors (6, 6.1) is defined as master-sensor, this master-sensor being responsible for the control of the monitoring installation and the at least one slave-sensor transmits the distance values it has detected to the master-sensor.

5. Process in accordance with Claim 4, **characterized by the fact** that the at least one slave-sensor transmits the distance values detected, in this regard coded as impulse-radar-signals, to the master-sensor.

6. Process in accordance with Claim 5, **characterized by the fact** that the impulse-radar-signals sent by the at least one slave-sensor for determination of the distance are coded with regard to the distance value recorded in a preceding pulse, especially in the directly preceding pulse.

7. Process in accordance with any of Claims 1 to 6, **characterized by the fact** that UWB signals are sent as impulse-radar signal.

8. Monitoring installation comprising at least two presence or motion sensors arranged at a distance to one another as well as comprising a transmission unit and a control unit (10), this transmission unit and these sensors (6, 6.1) being linked with the control unit (10) via a communication path, wherein the sensors (6, 6.1) are arranged with horizontal distance to one another and are designed to receive an impulse-radar-signal and are aligned in a way that their detection range at least partly overlaps, wherein the area detectable by all sensors is the monitoring area, **characterized by the fact** that within the monitoring area at least one inclusion area (8, 8.1) and/or at least one exclusion area (14, 15) is defined whose edge, at least partially, is made known to the system as distance value groups during setting up of the monitoring installation, wherein the distance values of a distance value group correspond to the distance of the edge to the sensors (6, 6.1) at a certain point, wherein during operation of the monitoring installation in monitoring mode by comparison of the current distance to the object detected by the sensors (6, 6.1) with the stored distance value groups it is determined whether an object in the monitoring area is inside or outside the at least one inclusion area (8, 8.1).

9. Monitoring installation in accordance with Claim 8, **characterized by the fact** that each of the sensors (6, 6.1) has a transmission unit with impulse-radarsignal generator.

10. Monitoring installation in accordance with any of Claims 8 or 9, **characterized by the fact** that the control unit (10) is assigned to one of the sensors (6, 6.1), this sensor (6, 6.1) being setup as master with regard to the other sensor or the other sensors (6, 6.1), and that the other sensor or the other sensors (6, 6.1) are set up as slaves to the master-sensor.

11. Monitoring installation in accordance with any of Claims 8 to 10, **characterized by the fact** that the transmission unit (12) and the several sensors (13, 13.1) are united in a monitoring module (11).

## Revendications

1. Processus de détection d'un objet au sein d'une zone de détection attribuée à un capteur de présence ou de mouvement, comprenant :
génération et émission d'un signal radar, réception d'un signal réfléchi par un objet se trouvant dans la portée de détection (signal de réception) et évaluation de celui-ci quant à sa distance par rapport aux capteurs, au moins deux capteurs de présence ou de mouvement, placés avec un écart horizontal l'un par rapport à l'autre et conçus pour recevoir un signal radar à impulsions étant mis en oeuvre pour la détection d'une présence ou d'un mouvement au sein de la zone de surveillance, les capteurs (6, 6.1) étant orientés afin que leurs zones de détection se recoupent au moins en partie et que la zone pouvant être couverte par les deux capteurs constitue la zone de surveillance,
- **caractérisé en ce que**
est/sont définie(s) au sein de la zone de surveillance au moins une zone d'inclusion (8, 8.1) et/ou une zone d'exclusion (14, 15) dont la limite est indiquée par le système au moins par section sous forme de groupes de valeurs de distance lors d'un paramétrage du dispositif de surveillance, les valeurs de distance d'un groupe de valeurs de distance correspondant à la distance de la limite aux capteurs (6, 6.1) à un point précis,
- et **en ce que**, si le dispositif de surveillance est utilisé en mode de surveillance, il est constaté, par comparaison de valeurs de distance par rapport à l'objet, actuellement saisies par les capteurs (6, 6.1), aux groupes de valeurs de distance consignés, si l'objet situé dans la zone de surveillance se trouve à l'intérieur ou à l'extérieur d'au moins l'une des zones d'inclusion (8, 8.1).

2. Procédé selon la revendication 1, **caractérisé en ce que,** pour le paramétrage de la zone d'inclusion (8, 8.1) au moins existante, le dispositif de surveillance est commuté sur un mode d'apprentissage et un objet est déplacé le long la ligne limite de la zone d'inclusion (8, 8.1) souhaitée et/ou de la zone d'exclusion (14, 15) au moins existante ou évolue sur cette ligne limite, pendant que les capteurs (6, 6.1) procèdent à une mesure de distance dans un cycle prédéfini et que les valeurs de distance par rapport à l'objet, déterminées par les capteurs (6, 6.1) au cours d'un cycle, sont consignées par le système à titre de groupe de valeurs de distance.

3. Procédé selon la revendication 2, **caractérisé en ce que,** lors de la définition de la limite (9) de la zone d'inclusion (8, 8.1), l'objet est déplacé continuellement le long de la limite souhaitée ou évolue continuellement le long de cette limite et que les capteurs (6, 6.1) procèdent à la mesure de la distance de manière synchrone ou tout au moins pour la plus grande part synchrone dans le cycle prédéfini.

4. Procédé selon l'une des revendications 1 à 3, **caractérisé en ce que** l'un des capteurs (6, 6.1) est défini comme étant le capteur maître, ce capteur maître étant responsable de la commande du dispositif de surveillance, et **en ce que** le capteur esclave au moins existant transmet les valeurs de distance déterminées par lui au capteur maître.

5. Procédé selon la revendication 4, **caractérisé en ce que** le capteur esclave au moins existant transmet sous forme de signaux radar à impulsion codés pour cela les valeurs de distance déterminées par lui, au capteur maître.

6. Procédé selon la revendication 5, **caractérisé en ce que** les signaux radar à impulsion envoyés par le capteur esclave au moins existant pour la détermination de la distance sont codés quant à la valeur de distance saisie lors d'un cycle précédent, en particulier lors du cycle précédant immédiatement.

7. Procédé selon l'une des revendications 1 à 6, **caractérisé en ce que** les signaux radar à impulsion sont émis sous forme de signaux UWB.

8. Dispositif de surveillance comprenant au moins deux capteurs de présence ou de mouvement placés à un certain écart l'un de l'autre, ainsi qu'une unité d'émission et une unité de commande (10), laquelle unité d'émission et lesquels capteurs (6, 6.1) étant en relation avec l'unité de commande (10) par l'intermédiaire d'une liaison de communication, les capteurs (6, 6.1) étant placés avec un écart horizontal l'un par rapport à l'autre et conçus pour la réception d'un signal radar à impulsions, et orientés de telle sorte que leurs zones de détection se recoupent au moins en partie, la zone pouvant être saisie par tous les capteurs représentant la zone de surveillance, **caractérisé en ce que,** au sein de la zone de surveillance, au moins une zone d'inclusion (8, 8.1) et/ou au moins une zone d'exclusion (14, 15) est/sont définie(s), dont la limite est indiquée par le système au moins par section sous forme de groupes de valeurs de distance lors d'un paramétrage du dispositif de surveillance, les valeurs de distance d'un groupe de valeurs de distance correspondant à la distance de la limite aux capteurs (6, 6.1) à un point précis, étant donné que si le dispositif de surveillance est utilisé en mode de surveillance, il est constaté, par comparaison de valeurs de distance par rapport à l'objet, actuellement saisies par les capteurs (6, 6.1), aux groupes de valeurs de distance consignés, si un objet situé dans la zone de surveillance se trouve à l'intérieur ou à l'extérieur de la zone d'inclusion (8, 8.1) au moins existante.

9. Dispositif de surveillance selon la revendication 8, **caractérisé en ce que** chacun des capteurs (6, 6.1) dispose d'une unité émettrice comportant un générateur de signaux radar à impulsions

10. Dispositif de surveillance selon l'une des revendications 8 ou 9, **caractérisé en ce que** l'unité de commande (10) est attribuée à l'un des capteurs (6, 6.1), lequel capteur (6, 6.1) est paramétré en capteur maître quant à l'autre ou aux autres capteur(s) (6, 6.1) et **en ce que** l'autre ou les autres capteur(s) (6, 6.1) sont paramétrés selon une relation d'esclave par rapport au capteur maître.

11. Dispositif de surveillance selon l'une des revendications 8 à 10, **caractérisé en ce que** l'unité émettrice (12) et les plusieurs capteurs (13, 13.1) sont réunis dans un module de surveillance (11).
